Europäisches Patentamt

European Patent Office

Office européen des brevets

(11) Veröffentlichungsnummer: **0 207 254**
**B1**

(12) **EUROPÄISCHE PATENTSCHRIFT**

(45) Veröffentlichungstag der Patentschrift:
**11.04.90**

(21) Anmeldenummer: **86106086.1**

(22) Anmeldetag: **02.05.86**

(51) Int. Cl.⁴: **F16B 13/06**

(54) **Befestigungselement mit Spreizhülse.**

(30) Priorität: **29.06.85 DE 3523418**
**26.07.85 DE 3526784**

(43) Veröffentlichungstag der Anmeldung:
**07.01.87 Patentblatt 87/2**

(45) Bekanntmachung des Hinweises auf die Patenterteilung:
**11.04.90 Patentblatt 90/15**

(84) Benannte Vertragsstaaten:
**AT BE CH FR GB IT LI NL**

(56) Entgegenhaltungen:
**DE-A- 1 475 083**
**DE-A- 2 110 684**
**DE-A- 2 161 224**
**DE-A- 2 234 196**
**DE-A- 2 826 502**
**DE-B- 2 254 627**
**FR-A- 2 300 929**
**FR-A- 2 487 453**
**US-A- 3 922 947**

(73) Patentinhaber: **fischer-werke Artur Fischer GmbH & Co. KG, Weinhalde 14-18,**
**D-7244 Waldachtal 3/Tumlingen(DE)**

(72) Erfinder: **Fischer, Artur, Dr. h.c., Weinhalde 14-18,**
**D-7244 Waldachtal 3/Tumlingen(DE)**

ACTORUM AG

## Beschreibung

Die Erfindung betrifft ein Befestigungselement mit Spreizhülse zur selbstklemmenden Befestigung in Bohrlöchern, bestehend aus einem Schaft, der an seinem hinteren Ende Mittel zum Halten oder Festspannen eines Gegenstandes und an seinem vorderen Ende einen im Querschnitt abgesetzten Abschnitt mit aufgesetzter, einen durchgehenden Längsschlitz aufweisenden Spreizhülse in Form einer im Durchmesser elastisch verformbaren Federhülse hat, an den sich ein das vordere Ende des Befestigungselementes bildender Spreizkonus anschließt.

Bei den bekannten Befestigungselementen kann das Aufbringen der Spreizhülse auf den abgesetzten Abschnitt dadurch erfolgen, daß die Spreizhülse zweischalig ausgebildet ist, wobei die Verbindung beider Schalen auf dem Abschnitt erfolgt. Es kann aber auch eine durchgehend geschlitzte Spreizhülse verwendet werden, die zum Aufsetzen auf den Schaft entsprechend weit aufgebogen und anschließend wieder zusammengebogen wird.

Zur Aufspreizung der Spreizhülse muß sich die Spreizhülse im Bohrloch des Ankergrundes festklemmen, damit der Spreizkonus bei einer an ihm angreifenden Zugkraft in die Hülse zu deren Aufweitung eindringen kann. Bei bekannten Befestigungselementen dieser Art sind an der Spreizhülse über den Durchmesser der Hülse hinausstehende Vorsprünge angeordnet, die sich im Bohrloch verpressen sollen. Diese Art der Festsetzung der Spreizhülse im Bohrloch machen das Befestigungselement sehr empfindlich auf Bohrlochtoleranzen. Bei engen Bohrlöchern wird die Spreizhülse über die Vorsprünge derart fest in den abgesetzten Abschnitt gepreßt, daß ein Eindringen des Spreizkonusses in die Spreizhülse unter Umständen nicht mehr möglich ist. Bei größer ausfallenden Bohrlöchern kann die Festsetzung der Spreizhülse im Bohrloch so gering sein, daß sie im Belastungsfall mit dem Konus aus dem Bohrloch herausbewegt wird. Die gleiche Problematik liegt vor, wenn ein zunächst passendes Bohrloch sich nachträglich durch einen die Bohrung erfassenden Riß erweitert. Die Rißbildung ist insbesondere dann zu berücksichtigen, wenn die Eignung des Befestigungselements für die Zugzone erreicht werden soll.

Da bei den bekannten Befestigungselementen in der Regel Spreizhülsen aus weichem Stahl verwendet werden, tritt bei diesen Spreizhülsen eine unelastische Aufspreizung bei Zugbelastung auf, weshalb bei auftretenden Veränderungen, beispielsweise durch Rißbildung im Bereich des Bohrlochs oder bei sich ändernder Belastung, eine Anpassung der Spreizhülsen nicht erfolgt, so daß eine Lockerung bei diesen bekannten Befestigungselementen und damit eine Beeinträchtigung der Sicherheit auftreten kann.

Zwar ist aus US-A 3 922 947 eine Spreizhülse bekannt, die aus einer im Durchmesser elastisch verformbaren Federhülse besteht. Jedoch ist bei dieser kein Freiraum zwischen der Spreizhülse und einem reduzierten Schaftdurchmesser über ihren gesamten Umfang ersichtlich. Den Erfordernissen bei einer Befestigung in gekrümmten oder in sonstiger Weise nicht idealen Bohrlöchern ist daher durch diesen bekannten Stand der Technik nicht in ausreichendem Maße Rechnung getragen, da sich die Spreizhülse nicht auf den Schaftdurchmesser zusammenpressen läßt.

Der Erfindung liegt die Aufgabe zugrunde, ein Befestigungselement mit Spreizhülse zu schaffen, welches eine sichere Befestigung in der Zugzone eines Betonteils gewährleistet.

Die Lösung dieser Aufgabe wird durch die im Hauptanspruch angegebenen Merkmale erreicht. Die als eine im Durchmesser elastisch verformbare Federhülse ausgebildete Spreizhülse verspannt sich beim Einschlagen des Befestigungselements im Bohrloch, da der Außerdurchmesser der Spreizhülse geringfügig größer ist als der Durchmesser des Bohrlochs bzw. des mittleren Schaftbereichs des Befestigungselements. Beim Einschlagen des Befestigungselements wird die Spreizhülse auf den Bohrlochdurchmesser elastisch zusammengedrückt, wobei sich die Spreizhülse dabei mit der Federkraft an die Innenwand der Bohrung anpreßt. Der Außendurchmesser der Federhülse ist dabei so gewählt, daß bei den auftretenden Bohrlochtoleranzen stets ein hinreichend starkes Verspannen der Federhülse im Bohrloch gewährleistet ist. Der Freiraum, zwischen Spreizhülse und dem abgesetzten Abschnitt ist dabei so groß gewählt, daß die Spreizhülse zumindest auf den maximalen Außendurchmesser des Schaftes zusammengedrückt werden kann. Wird der Schaftdurchmesser im Hinblick auf auftretende Bohrlochtoleranzen so bemessen, daß auch bei engen Bohrlöchern ein Verklemmen des Schaftes im Bohrloch nicht erfolgt, so ist beim Einschlagen des Befestigungselementes stets nur die Reibung zu überwinden, die aufgrund der von der Spreizhülse auf die Bohrlochinnenwand ausgeübten Federkraft auftritt.

Der abgesetzte Abschnitt ist so ausgebildet, daß er eine Materialstärke hat, die kleiner ist als der Innendurchmesser der im Bohrloch zusammengedrückten Spreizhülse. Durch diese Maßnahme wird gewährleistet, daß auch bei dem ins Bohrloch eingeschlagenen Befestigungselement zwischen dem von der Spreizhülse umschlossenen Abschnitt ein Freiraum besteht, der bei krummen Bohrlöchern in der Weise eine entsprechende Biegung des abgesetzten Abschnitts ermöglicht, daß der Spreizkonus bei Zugbelastung gleichmäßig an der Spreizhülse anliegen kann, wodurch eine gleichmäßige Einleitung der Spreizkräfte in die Spreizhülse und damit eine entsprechend gleichmäßige Klemmkraftverteilung im Bohrloch erreicht werden kann. Da zwischen dem abgesetzten Abschnitt und der ihn umschließenden Spreizhülse ein Freiraum vorgesehen ist, kann hier von einer pendelnden Spreizhülse gesprochen werden.

Die Spreizhülse kann entsprechend einer Ausgestaltung der Erfindung einen durchgehenden Längsschlitz aufweisen, dessen lichte Weite kleiner ist als die maximale Materialstärke des abgesetzten Abschnitts. Die als Federhülse ausgebildete Spreizhülse kann somit durch geringfügiges Aufweiten im elastischen Bereich auf den abgesetzten Abschnitt seitlich aufgeschoben werden, wobei das Profil der Spreizhülse nach dem Aufschieben wieder auf seinen ursprünglichen Durchmesser zurückfedert. Diese bevorzugte Ausführungsform sieht vor, daß der abgesetzte Abschnitt einen Flachsteg mit keilförmigem Querschnitt bildet, dessen eine Schmalseite gleich breit oder schmaler und dessen andere Schmalseite breiter als die lichte Weite des Längsschlitzes der Spreizhülse ist. Die beispielsweise aus einem Federstahl gefertigte Hülse läßt sich verhältnismäßig einfach von der schmaleren Seite des Flachsteges über den abgesetzten Abschnitt aufschieben.

Der Schaft des Befestigungselements mit abgesetztem Abschnitt und Spreizkonus kann aus ungehärtetem Stahl bestehen, während die Spreizhülse gehärtet bzw. vergütet ist. Bei der Aufweitung und Verklemmung der Spreizhülse im Bohrloch wird dadurch gewährleistet, daß auch bei hohen Zugkräften das Material der Spreizhülse nicht wegfließt. Ausserdem bietet der Spreizkonus, der z.B. durch Formpressen hergestellt ist, für die aus gehärtetem Stahl bestehende Spreizhülse eine optimale Gleitfläche. Durch diese Maßnahmen erhält man ein Befestigungselement, dessen Spreizhülse sich auch bei bestehender Zugbelastung einem sich nachträglich durch einen Riß erweiternden Bohrloch selbstklemmend anpaßt.

Die Erfindung wird nachfolgend anhand der Zeichnung näher erläutert. Es zeigen:

Figur 1 ein erfindungsgemäßes Befestigungselement mit Spreizhülse im unbelasteten Zustand,

Figur 2 den Schnitt AB des in Figur 1 dargestellten Befestigungselements und

Figur 3 ein in ein Bohrloch eingesetztes Befestigungselement.

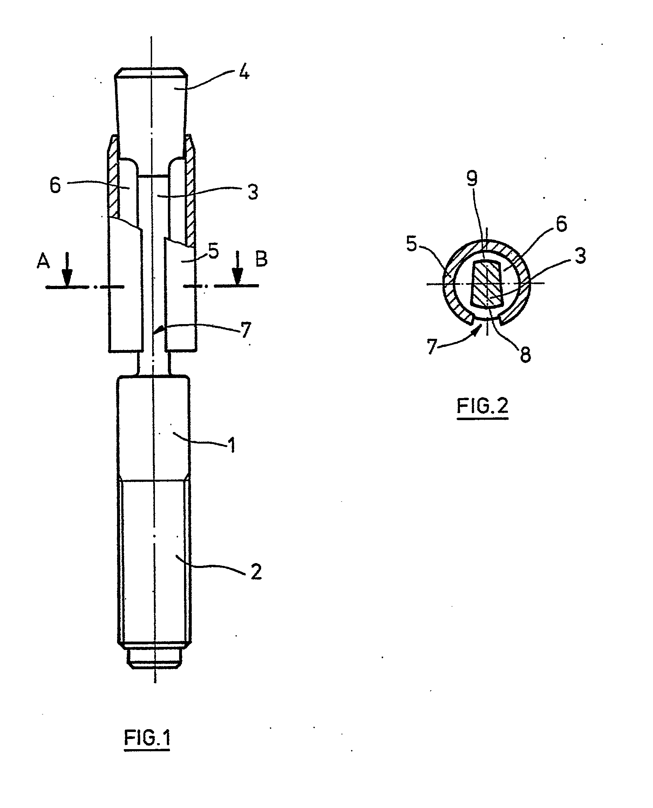

Das in Figur 1 dargestellte Befestigungselement besteht aus einem Schaft 1, der an seinem hinteren Ende einen Gewindeabschnitt 2 zum Festspannen eines Gegenstandes aufweist. Im vorderen Bereich des Schaftes 1 befindet sich ein abgesetzter Abschnitt 3, an den sich zum vorderen Ende hin der Spreizkonus 4 anschließt. Im Bereich des Abschnitts 3 ist eine aus Federstahl bestehende Spreizhülse 5 aufgesetzt, die mit radialem und axialem Spiel den abgesetzten Abschnitt 3 umschließt.

In Figur 2 ist der Schnitt entsprechend der Schnittlinie AB dargestellt. Der abgesetzte Abschnitt 3 bildet einen im Querschnitt keilförmigen Flachsteg, dessen größte Breite bzw. dessen maximale Materialstärke kleiner ist als der Innendurchmesser der Spreizhülse 5. Dadurch entsteht zwischen Abschnitt 3 und Spreizhülse 5 ein Freiraum 6, wodurch die Spreizhülse 5 lose gelagert wird. Auf Grund dieser losen Lagerung der Spreizhülse kann die Spreizhülse 5 auch als pendelnd gelagerte Spreizhülse bezeichnet werden.

Die Spreizhülse 5 besitzt einen durchgehenden Längsschlitz 7, dessen lichte Weite schmaler ist als die breitere Seite 8 des keilförmigen Profils des Abschnitts 3. Dadurch wird eine sichere Befestigung der Spreizhülse 5 im Bereich des Abschnitts 3 erreicht. Zum Aufschieben der Spreizhülse 6 auf den abgesetzten Abschnitt 3 wird diese mit ihrem durchgehenden Längsschlitz 7 an die Schmalseite 9 des keilförmigen Profils angesetzt und von der Seite her über den Abschnitt 3 aufgeschoben, bis die Spreizhülse 5 hinter der breiteren Seite 8 des Profils auf ihren ursprünglichen Durchmesser zurückfedern kann. Das mit der Spreizhülse 5 bestückte Befestigungselement weist einen auf der ganzen Länge im wesentlichen gleichen Außendurchmesser auf, jedoch besitzt die als Spannfeder wirkende Spreizhülse 5 ein geringfügiges Übermaß. Beim Einschlagen des Befestigungselements in ein Bohrloch wird die Spreizhülse 5 auf den Durchmesser der Bohrung zusammengedrückt und dadurch so fest im Bohrloch gehalten, daß bei einer am hinteren Ende des Befestigungselementes angreifenden Zugbelastung der Konus 4 in die Spreizhülse 5 gezogen und die Spreizhülse 5 dadurch im Bohrloch nach außen gegen die Bohrlochwand gepreßt wird. Es tritt somit bei Zugbelastung im Bereich der Spreizhülse 5 eine Selbstklemmung ein.

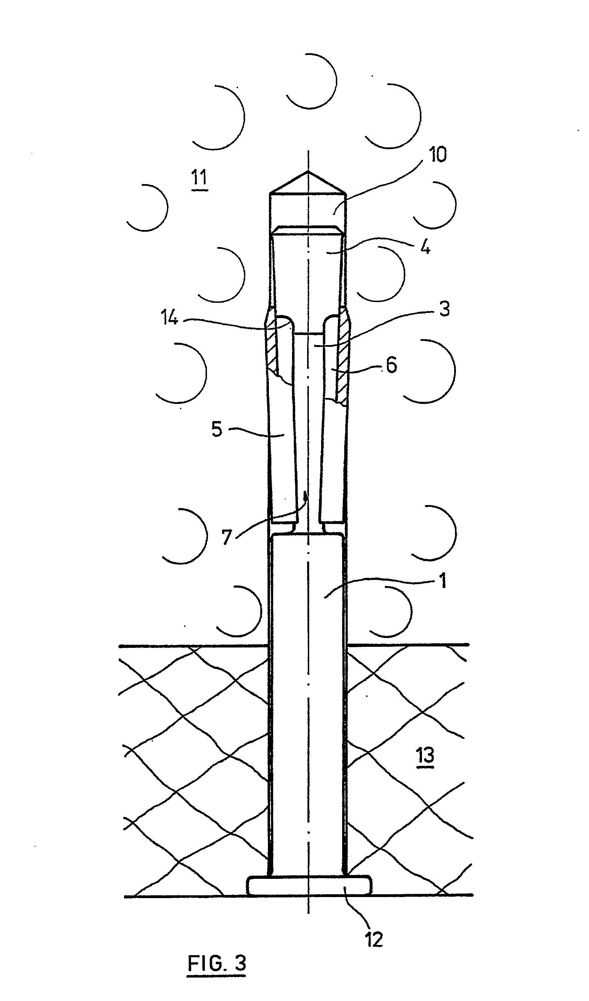

Figur 3 zeigt ein als Spreiznagel wirkendes Befestigungselement, welches in einem Bohrloch 10 eines Betonteils 11 verspannt ist. Am hinteren Ende ist an diesem Befestigungsteil ein Nagelkopf 12 angeformt, der einen zu befestigenden Gegenstand 13 am Betonteil 11 festspannt.

Im Bereich des Übergangs 14 zwischen Spreizkonus 4 und dem Keilprofil des Abschnitts 3 verlaufen die Schmalseiten des keilförmigen Profils gleichermaßen konisch wie die Konusfläche des Spreizkonusses 4.

Durch die Federwirkung der Spreizhülse 5 entsteht eine Verklemmung, die die Spreizhülse 5 unverrückbar im Bohrloch festhält. Die Verspannung nimmt mit der Zugkraft zu, so daß eine sichere Befestigung auch ohne vorherige Verankerung des Befestigungselements im Bohrloch erreicht wird. Bei Bohrlochveränderungen paßt sich die Spreizhülse 5 federnd an, so daß stets die gewünschte Klemmwirkung erreicht wird. Durch den zwischen abgesetztem Abschnitt 3 und Spreizhülse 5 bestehenden Freiraum 6 kann sich die Spreizhülse 5 bei gekrümmtem Bohrloch 10 unabhängig von Abschnitt 3 an den Verlauf der Bohrlochwandung anpassen. Dadurch wird eine gleichmäßige Verspannung im Bereich des Spreizkonus 4 und damit auch eine gleichmäßige Krafteinleitung in das Betonteil 11 erzielt, wodurch eine besonders sichere und hochbelastbare Verklemmung erreicht wird.

## Patentansprüche

1. Befestigungselement mit Spreizhülse (5) zur selbstklemmenden Befestigung in Bohrlöchern, bestehend aus einem Schaft (1), der an seinem hinteren Ende Mittel zum Halten oder Festspannen eines Gegenstandes und an seinem vorderen Ende einen im Querschnitt abgesetzten Abschnitt (3) mit aufgesetzter, einen durchgehenden Längsschlitz (7) aufweisenden Spreizhülse in Form einer im Durchmesser elastisch verformbaren Federhülse hat, an den sich ein das vordere Ende des Befestigungselementes bildender Spreizkonus (4) anschließt, dadurch gekennzeichnet, daß bei auf den Außendurchmesser des Schaftes (1) zusammengedrückter Spreizhülse (5) zwischen deren Innenwand und dem von ihr umschlossenen abgesetzten Abschnitt (3) des Schaftes (1) ein Freiraum (6) verbleibt.

2. Befestigungselement nach Anspruch 1, dadurch gekennzeichnet, daß der abgesetzte Abschnitt (3) einen Flachsteg mit keilförmigem Querschnitt bildet, dessen eine Schmalseite (9) gleich breit oder schmaler und dessen andere Schmalseite (8) breiter als die lichte Weite des Längsschlitzes (7) der Spreizhülse (5) ist.

**Claims**

1. Fastening element having an expansible sleeve (5) for self-wedging fastening in drilled holes, comprising a shaft (1) which at its rear end has means for holding or clamping an object and at its front end has a portion (3) of reduced cross-section on which is fitted an expansible sleeve, in the form of a resiliently deformable spring sleeve, having a continuous longitudinal slot (7), the portion of reduced cross-section being adjoined by an expander cone (4) forming the forward end of the forward end of the fastening element, characterised in that when the expansible sleeve (5) is compressed to the outer diameter of the shaft (1) a space (6) remains between the inside wall of the sleeve and the reduced portion (3) of the shaft (1) which is encompassed by the sleeve.

2. Fastening element according to claim 1, characterised in that the reduced portion (3) forms a flat stem having a wedge-like cross-section, the one narrow side (9) of which is the same width or narrower and the other narrow side (8) of which is wider than the width of the longitudinal slot (7) of the expansible sleeve (5).

**Revendications**

1. Dispositif de fixation comportant une douille (6) à expansion, destiné à être fixé par auto-blocage dans des trous percés, dispositif constitué par un fût (1) qui comporte à son extrémité arrière un moyen de retenue, ou de fixation par vissage, d'un objet, et à son extrémité avant, une partie (3) dont la section transversale est en retrait, comportant, mise en place sur elle, une douille d'expansion présentant une fente longitudinale (7) qui la traverse, sous la forme d'une douille à ressort dont le diamètre peut se déformer élastiquement, sur laquelle partie (3) se raccorde un cône (4) d'expansion formant l'extrémité avant de l'élément de fixation, dispositif caractérisé en ce que, lorsque la douille (5) est comprimée de manière à atteindre le diamètre extérieur du fût (1), il subsiste un espace libre (6) entre la paroi intérieure et la partie en retrait (3) du fût (1) qui est entourée par celle-ci.

2. Dispositif de fixation selon la revendication 1, caractérisé en ce que la partie (3) en retrait forme une partie de liaison plate dont la section transversale est en forme de coin, dont le côté étroite (9) est d'une largeur égale ou inférieure à la largeur libre de la fente longitudinale (7) de la douille (5) d'expansion et dont l'autre côté étroit (8) est plus large que la largeur libre de la fente longitudinale (7).

FIG.1

FIG.2

FIG. 3